# EUROPEAN PATENT SPECIFICATION

(11) **EP 4 096 891 B1**
(45) Date of publication and mention of the grant of the patent: **27.11.2024**
(21) Application number: 21702666.5
(22) Date of filing: 29.01.2021
(51) Int. Cl.: B29B 17/02, B29B 17/04, B29K 1/00, B29L 11/00

(54) **EYEWEAR RECYCLING METHOD**
BRILLENRECYCLINGVERFAHREN
PROCÉDÉ DE RECYCLAGE DE LUNETTE

(30) Priority: 31.01.2020 SE 2050103
(43) Date of publication of application: 07.12.2022
(73) Proprietor: EOE EYEWEAR AB, 111 39 Stockholm (SE)
(72) Inventor: HANSÉN, Jan Thorbjörn, 961 67 Boden (SE); LARSSON, Mikael, 972 42 Luleå (SE)
(74) Representative: Groth & Co. KB
(86) International application number: PCT/EP2021/052156
(87) International publication number: WO 2021/152124

(56) References cited:
- EP-A1- 2 599 827
- EP-A1- 3 135 464
- EP-B1- 3 135 464
- CN-A- 110 270 400
- DE-A1- 4 324 830
- FR-A1- 2 711 079
- FR-A1- 3 066 128
- US-A1- 2003 067 584
- US-A1- 2013 293 826
- KEYTECH S.R.L.: "3D Printing Acetate Cellulose Filament glasses 2", 22 April 2014 (2014-04-22), pages 1, XP055373785, Retrieved from the Internet <URL:http://www.arborbiokaps.com/allegati/3D Printing Acetate Cellulose Filament glasses 2_st.jpg> [retrieved on 20170517]
- DABORN G R ET AL: "CRYOGENIC COMMUNICATION IN SCRAP RECYCLING", RESOURCES, CONSERVATION AND RECYCLING, ELSEVIER, AMSTERDAM, NL, vol. 1, no. 1, 1 March 1988 (1988-03-01), pages 49 - 63, XP002057687, ISSN: 0921-3449, DOI: 10.1016/0921-3449(88)90007-9
- SHENT H ET AL: "A review of plastics waste recycling and the flotation of plastics", RESOURCES, CONSERVATION AND RECYCLING, ELSEVIER, AMSTERDAM, NL, vol. 25, no. 2, 1 February 1999 (1999-02-01), pages 85 - 109, XP004158340, ISSN: 0921-3449, DOI: 10.1016/S0921-3449(98)00017-2

## Description

### FIELD OF THE INVENTION

The present invention relates to methods for recycling eyewear, for example glasses and sunglasses.

### BACKGROUND OF THE INVENTION

Eyewear, for example glasses and sunglasses, is a vision aid, consisting of glass or hard plastic lenses mounted in a frame that holds them in front of the eyes of the user, typically utilizing a bridge over the nose and arms which rest over the ears. Glasses, also known as eyeglasses or spectacles, are typically used for vision correction, such as with reading glasses and glasses used for nearsightedness. Sunglasses allow for better vision in bright daylight and may protect the eyes of a user against damage from excessive levels of ultraviolet light. Typical sunglasses lenses are tinted for protection against bright light or polarized to remove glare.

The main purpose of glasses and sunglasses may also be to protect the eyes of the user against particulates, water or chemicals.

Sometimes eyewear is worn purely for fashion or aesthetic purposes.

Frames for eyewear can be made from a wide range of materials but the most common is a combination of a plastic material combined with a metal for reinforcement and mechanical features such as hinges.

The most commonly used material in quality eyewear is cellulose acetate. Cellulose acetate is a plant-based plastic that is hypoallergenic. This material was first used for eyewear in the late 1940's because of brittleness and other problems with previously used plastics. Today's acetates are known for being strong, lightweight, and flexible. Cellulose acetate also allows for a wide range for transparency, rich colors, and finishes.

The cellulose acetate is typically first formed into a plate or slab like substrate from which different parts of the eyewear frames can be cut, shaped and polished.

Patent publication DE4324830A1 teaches a method for the recycling of coated plastic material, such as discarded eyewear, by acid treatment followed by rinsing and drying, wherein the plastic material is subjected to an acid bath of concentrated sulphuric acid at elevated temperature.

Patent publication US2003067584A1 discloses an eyewear frame allowing for easy hinge pin removal, thus facilitating separation of plastic and metal materials for recycling.

Patent publication CN1 10270400A discloses a recycling device for glasses comprising a dividing device separating the lens of eyewear from frames of eyewear.

The article "CRYOGENIC COMMUNICATION IN SCRAP RECYCLING", written by Dabron et al, published 1st of march 1988, teaches technical advantages and application areas for cryogenic communication in scrap recycling, one such application area being composite scrap.

An enormous number of glasses are discarded all over the world each year. The number is increasing as eyeglasses are increasingly seen as a fashion accessory. Some frames are reused, but a large majority of the discarded glasses are simply treated as refuse and end up in landfills or incineration plants.

Accordingly, there exists a need for improved methods for recycling eyewear and the materials used therein.

### SUMMARY OF THE INVENTION

An object of the present disclosure is to provide a method for recycling eyewear, specifically glasses and sunglasses, which alleviates at least some of the deficiencies of existing lead removal methods.

Another object of the present disclosure is to provide a method for recycling eyewear, which can separate the different materials used therein with high yield.

Yet another object of the present disclosure is to provide a recycled cellulose acetate material with a purity and quality which allows it to be reused in the manufacture of new eyewear.

Yet another object of the present disclosure is to provide eyewear comprising the recycled cellulose acetate material.

The above objects as well as other objects that will become apparent to the skilled person in the light of the present disclosure are achieved by the various aspects of the invention as set out herein.

The present invention is based on the realization that the combination of materials commonly used in almost all high-quality eyewear allows for separation and recycling of materials to a surprisingly high degree, close to 100%. By first freezing the eyewear below the glass transition temperature of the plastic materials used therein, and then crushing the frozen eyewear, a mixture of crushed materials can be obtained. The mixture can then be separated, e.g. by floatation, to obtain the different materials of the mixture at a purity close to 100%. Compared to conventional plastic recycling involving melting of the plastic materials, the inventive freeze-crush treatment is gentle on the plastic materials at a molecular level and allows the materials to be reused with minimum degradation of their original mechanical and optical properties. The method can be used with eyewear made of a single plastic material or a combination of plastic materials combined with metals. The method can even be used to recycle the entire eyewear, i.e. frames including lenses, since the lenses are made of a different material (polycarbonate or glass) than the frames which can be efficiently separated, e.g. by floatation, from the crushed mixture.

According to the invention, there is provided a method for recycling discarded eyewear comprising one or more metal(s) and cellulose acetate, said method comprising:
a) reducing the temperature of the discarded eyewear to a temperature below the glass transition temperature of the cellulose acetate,
b) crushing the discarded eyewear at a temperature below the glass transition temperature of the cellulose acetate to release the cellulose acetate from the metal(s) and obtain a mixture of crushed cellulose acetate and metal(s), and
c) subjecting the mixture to a density-based separation to separate the crushed cellulose acetate from the metal(s).

The term eyewear as used herein refers to glasses or sunglasses, for vision correction, protective or fashion or aesthetic purposes. The eyewear may comprise the complete eyewear, including a frame and lenses, or parts thereof, such as only the frame. The eyewear generally comprises one or more metal(s), typically used in the frame, hinges, reinforcements and other details and one or more plastic material(s), typically used in the frame and lenses.

The glass transition temperature is the temperature at which amorphous polymers (or amorphous regions in semi-crystalline polymers) transition from a hard and brittle "glassy" state into a viscous or rubbery state as the temperature is increased. By reducing the temperature of the discarded eyewear to a temperature below the glass transition temperature of plastic materials such as cellulose acetate, the plastic material(s) will exhibit a brittle behavior which enables efficient separation of the plastic material(s) from the metal(s).

The T_{g} of the plastic materials commonly used in eyewear, such as cellulose acetate may be very low. As an example, the T_{g} of cellulose acetate used in eyewear frames is typically in the range of -53 °C to -67 °C depending on quality.

In order to reduce the temperature of the discarded eyewear to a temperature below the glass transition temperature of the plastic material(s), the temperature of the eyewear is preferably reduced to below -55 °C, preferably below -60 °C, preferably below -65 °C, and more preferably below -70 °C. More preferably the temperature of the eyewear is reduced to a temperature well below the glass transition temperature of the plastic material(s), such that the temperature of the materials(s) will remain below the glass transition temperature also during the subsequent crushing step. Thus, the temperature of the eyewear is preferably reduced to below -75 °C, preferably below -100 °C, preferably below -125 °C, and more preferably below -150 °C. The temperature reduction may for example be readily achieved by immersion of the eyewear in liquid nitrogen at about -196 °C.

The crushing of the discarded eyewear can be effected in a wide range of manual or automated manners as readily recognized by the skilled person. The crushing may for example be effected by a roller mill, a hammer mill or a ball mill, but other methods and devices are also possible. The crushing operation should preferably be quick and not generate excessive heat, such that the temperature of the crushed materials is not increased more than necessary. Preferably, the discarded eyewear should be crushed at a temperature below the glass transition temperature of the plastic material(s) to release the plastic material(s) from the metal(s) in an optimal manner. The inventors have found that a roller mill with mutually engaging cog wheel shaped rolls is useful for quickly and efficiently releasing the plastic material(s) from the metal(s). The metal is often present in the form of metal wire embedded in the frames of the eyewear. The cog wheel shaped rolls may be sized, shaped and spaced apart in a manner such that the eyewear is subjected to bending or twisting action, rather than cutting or grinding action. Subjecting the eyewear to bending or twisting action has been found to cause the frozen plastic to be efficiently released from the metal, without unnecessary cutting of the metal and with a minimum generation of excessive heat. In some embodiments, the crushing comprises subjecting the discarded eyewear to bending or twisting action to release the plastic material(s) from the metal(s). In some embodiments, the crushing consists of subjecting the discarded eyewear to bending or twisting action to release the plastic material(s) from the metal(s). In preferred embodiments, the plastic material(s) are released from the metal(s) mainly by bending or twisting action. Crushing by bending or twisting action has been found particularly useful for materials commonly used in eyewear, especially for separating cellulose acetate in intimate contact with a metal, such as steel. This has been found to allow the different materials used in most eyewear to be release from each other and separated to a surprisingly high degree, close to 100%.

The inventive method of freezing and crushing the eyewear has been found to be especially advantageous for recycling eyewear comprising cellulose acetate, since the crushed cellulose acetate can be obtained in a particle size range suitable for use directly in conventional sheet forming methods. Preferably the particles should have a particle size of at least about 2 mm, preferably at least about 4 mm. In some embodiments the crushed cellulose acetate has a particle size in the range of 2-30 mm, preferably in the range of 4-15 mm.

The separation is a density-based, also commonly referred to as buoyancy-based separation. Density-based, or buoyancy-based separation can be achieved in a number of different manners as recognized by the skilled person. The most common and straightforward method is to place the mixture in a liquid flotation medium having a density between two of the materials of the mixture, whereby the lighter material will float, and the heavier material will sink.

In some embodiments, the discarded eyewear comprises cellulose acetate and at least one additional plastic material and step c) comprises subjecting the mixture to a first separation to separate the crushed plastic materials from the metal(s) and a second separation to separate the at least two different plastic materials.

In some embodiments, the separation comprises flotation in a liquid flotation medium. The liquid flotation medium may for example be water or an aqueous saline solution. Using a saline solution as the liquid flotation medium, the density of the solution can be adjusted and tailored by changing the salt concentration. The density of the liquid flotation medium may typically be in the range of 1-2 kg/dm³, but other densities may also be useful. The skilled person understands how to select a suitable density of a liquid flotation medium in order to achieve a desired separation of two or more materials of known densities. In some embodiments, the density of the liquid flotation medium is in the range of 1.2-1.6 kg/dm³. In some embodiments, the density of the liquid flotation medium is in the range of 1.2-1.5 kg/dm³. In some embodiments, the density of the liquid flotation medium is in the range of 1.2-1.4 kg/dm³. In some embodiments, the density of the liquid flotation medium is in the range of 1.25-1.35 kg/dm³, such as about 1.3 kg/dm³.

In some embodiments, the separation comprises flotation in two or more flotation media having different densities. For example, a first separation in a first liquid flotation medium can be used to separate plastics from heavier materials such as metals and/or glass, and a second separation in a second liquid flotation medium can be used to separate different plastic materials having different densities, such as cellulose acetate and polycarbonate.

In some embodiments, the discarded eyewear comprises eyeglasses, sunglasses or a mixture thereof. Although the inventive method can be used to recycle most eyewear, without prior sorting, it may in some instances be preferred to sort the starting material based on for example material content or color. In some embodiments, the discarded eyewear is sorted based on plastic content prior to recycling.

Cellulose acetate is the most common plastic material used in frames of eyewear. Incidentally, the inventive method has been found to be particularly suitable for separating cellulose acetate from metal typically used in hinges, reinforcements and other details.

Cellulose acetate is the acetate ester of cellulose. It is a thermoplastic polymer with a melting point in the range of 220 to 240 °C and a glass transition temperature (T_{g}) in the range of -53 °C to -67 °C depending on quality.

In some embodiments, the discarded eyewear comprises at least 25 wt% cellulose acetate, preferably at least 50 wt% cellulose acetate.

In some embodiments, the discarded eyewear comprises steel. Steel typically has a density in the range of 7.75-8.05 kg/dm³.

In some embodiments, the discarded eyewear comprises aluminum. Aluminum typically has a density of about 2.7 kg/dm³.

In some embodiments, the discarded eyewear comprises cellulose acetate in intimate contact with a metal. In some embodiments the frame of the discarded eyewear is made of cellulose acetate in intimate contact with a metal, typically steel.

In some embodiments, wherein the discarded eyewear comprises at least two different plastic materials, the discarded eyewear may comprise polycarbonate additional to cellulose acetate. Polycarbonate typically has a density in the range of 1.20-2.22 kg/dm³.

In some embodiments, the discarded eyewear comprises glass. Glass typically has a density of about 2.5 kg/dm³.

The present invention is based on the realization that the combination of materials commonly used in almost all high-quality eyewear allows for separation and recycling of materials to a surprisingly high degree, close to 100%. By first freezing the eyewear below the glass transition temperature of the plastic materials used therein, and then crushing the frozen eyewear, a close to 100% separated mixture of crushed materials can be obtained. In some embodiments, at least 90 %, preferably at least 95 %, more preferably at least 99 %, of the plastic material(s) are released from the metal(s).

The inventive method provides separated materials with high yield, high purity and high quality. The separated materials are advantageously recycled and used in the manufacture of new products. In an especially preferred embodiment, the separated materials obtained by the inventive recycling method are reused in the manufacture of new eyewear frames. Although the demands on raw materials for use in eyewear are high, the high purity and high quality of the materials obtained by the inventive method can still meet the required standards.

In some embodiments, the method further comprises the step:
d) using the crushed plastic material(s) and/or metal(s) in the manufacture of new eyewear frames.

In some embodiments, the method further comprises the step:
d) using the crushed plastic material(s) in the manufacture of new eyewear frames.

In some embodiments, step d) comprises forming the crushed plastic material(s) into sheets from which different parts of the eyewear frames can be cut, shaped and finished. The inventive method of freezing and crushing the eyewear has been found to be especially advantageous for recycling eyewear comprising cellulose acetate, since the crushed cellulose acetate can be obtained in a particle size range suitable for use directly in conventional sheet forming methods.

The inventive method of freezing and crushing the eyewear has been found to be especially advantageous for eyewear comprising cellulose acetate, since the crushed cellulose acetate can be obtained in a particle size range suitable for use directly in conventional sheet forming methods. Thus, the recycled cellulose acetate material obtained by a method according to the first aspect can be provided in the form of a cellulose acetate sheet.

Generally, while the products, materials and methods are described in terms of "comprising" various components or steps, the products, materials and methods can also "consist essentially of" or "consist of" the various components and steps. While the invention has been described herein with reference to various exemplary embodiments, it will be understood by those skilled in the art that various changes may be made and equivalents may be substituted for elements thereof without departing from the scope of the invention, as defined by the appended claims.

In addition, many modifications may be made to adapt a particular situation or feature to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for recycling discarded eyewear comprising one or more metal(s) and cellulose acetate, said method comprising:
a) reducing the temperature of the discarded eyewear to a temperature below the glass transition temperature of the cellulose acetate,
b) crushing the discarded eyewear at a temperature below the glass transition temperature of the cellulose acetate to release the cellulose acetate from the metal(s) and obtain a mixture of crushed cellulose acetate and metal(s), and
c) subjecting the mixture to a density-based separation to separate the crushed cellulose acetate from the metal(s).

2. The method according claim 1, wherein the discarded eyewear comprises at least two different plastic materials and step c) comprises subjecting the mixture to a first separation to separate the crushed plastic materials from the metal(s) and a second separation to separate two different plastic materials.

3. The method according to any one of the preceding claims, wherein the separation comprises flotation in a liquid flotation medium.

4. The method according to any one of the preceding claims, wherein the separation comprises flotation in two or more flotation media having different densities.

5. The method according to any one of the preceding claims, wherein the discarded eyewear comprises eyeglasses, sunglasses or a mixture thereof.

6. The method according to any one of the preceding claims, wherein the discarded eyewear comprises at least 25 wt% cellulose acetate, preferably at least 50 wt% cellulose acetate.

7. The method according to any one of the preceding claims, wherein the discarded eyewear comprises steel.

8. The method according to any one of the preceding claims, wherein the discarded eyewear comprises cellulose acetate in intimate contact with steel.

9. The method according to claim 2, wherein the discarded eyewear comprises polycarbonate.

10. The method according to any one of the preceding claims, wherein the discarded eyewear comprises glass.

11. The method according to any one of the preceding claims, wherein the at least 90 %, preferably at least 95 %, more preferably at least 99 %, cellulose acetate is released from the metal(s).

12. The method according to any one of the preceding claims, wherein the discarded eyewear is sorted based on plastic content prior to recycling.

13. The method according to any one of the preceding claims, further comprising the step:
d) using crushed cellulose acetate in the manufacture of new eyewear frames.

## Patentansprüche

1. Verfahren zum Recyceln von weggeworfenen Brillen, umfassend ein oder mehrere Metall(e) und Celluloseacetat, wobei das Verfahren Folgendes umfasst:
a) Absenken der Temperatur der weggeworfenen Brillen auf eine Temperatur unterhalb der Glasübergangstemperatur des Celluloseacetats,
b) Zerkleinern der weggeworfenen Brillen bei einer Temperatur unterhalb der Glasübergangstemperatur des Celluloseacetats, um das Celluloseacetat von dem/den Metall(en) freizusetzen und ein Gemisch aus zerkleinertem Celluloseacetat und Metall(en) zu erhalten, und
c) Unterziehen der Mischung einer dichtebasierten Trennung zum Trennen des zerkleinerten Celluloseacetats von dem/den Metall(en).

2. Verfahren nach Anspruch 1, wobei die weggeworfenen Brillen mindestens zwei verschiedene Kunststoffmaterialien umfassen und Schritt c) Unterziehen der Mischung einer ersten Trennung umfasst, um die zerkleinerten Kunststoffmaterialien von dem/den Metall(en) zu trennen, und einer zweiten Trennung, um zwei verschiedene Kunststoffmaterialien zu trennen.

3. Verfahren nach einem der vorhergehenden Ansprüche, wobei die Trennung eine Flotation in einem flüssigen Flotationsmedium umfasst.

4. Verfahren nach einem der vorhergehenden Ansprüche, wobei die Trennung eine Flotation in zwei oder mehr Flotationsmedien mit unterschiedlichen Dichten umfasst.

5. Verfahren nach einem der vorhergehenden Ansprüche, wobei die weggeworfenen Brillen Lesebrillen, Sonnenbrillen oder eine Mischung davon umfassen.

6. Verfahren nach einem der vorhergehenden Ansprüche, wobei die weggeworfenen Brillen mindestens 25 Gew.-% Celluloseacetat, vorzugsweise mindestens 50 Gew.-% Celluloseacetat umfassen.

7. Verfahren nach einem der vorhergehenden Ansprüche, wobei die weggeworfenen Brillen Stahl umfassen.

8. Verfahren nach einem der vorhergehenden Ansprüche, wobei die weggeworfenen Brillen Celluloseacetat in engem Kontakt mit Stahl umfassen.

9. Verfahren nach Anspruch 2, wobei die weggeworfenen Brillen Polycarbonat umfassen.

10. Verfahren nach einem der vorhergehenden Ansprüche, wobei die weggeworfenen Brillen Glas umfassen.

11. Verfahren nach einem der vorhergehenden Ansprüche, wobei mindestens 90 %, vorzugsweise mindestens 95 %, insbesondere mindestens 99 %, Celluloseacetat aus dem/den Metall(en) freigesetzt werden.

12. Verfahren nach einem der vorhergehenden Ansprüche, wobei die weggeworfenen Brillen vor dem Recycling auf der Grundlage des Kunststoffgehalts sortiert werden.

13. Verfahren nach einem der vorhergehenden Ansprüche, das ferner folgenden Schritt umfasst:
d) Verwenden von zerkleinertem Celluloseacetat zur Herstellung neuer Brillengestelle.

## Revendications

1. Procédé de recyclage de lunettes usagées comprenant un ou plusieurs métaux et de l'acétate de cellulose, ledit procédé comprenant :
a) la réduction de la température des lunettes usagées à une température inférieure à la température de transition vitreuse de l'acétate de cellulose,
b) le broyage des lunettes usagées à une température inférieure à la température de transition vitreuse de l'acétate de cellulose pour libérer l'acétate de cellulose du ou des métaux et obtenir un mélange d'acétate de cellulose broyé et de métal/métaux, et
c) la soumission du mélange à une séparation basée sur la densité pour séparer l'acétate de cellulose broyé du ou des métaux.

2. Procédé selon la revendication 1, dans lequel les lunettes usagées comprennent au moins deux matières plastiques différentes et l'étape c) comprend la soumission du mélange à une première séparation pour séparer les matières plastiques broyées du ou des métaux et une seconde séparation pour séparer deux matières plastiques différentes.

3. Procédé selon l'une quelconque des revendications précédentes, dans lequel la séparation comprend une flottation dans un milieu de flottation liquide.

4. Procédé selon l'une quelconque des revendications précédentes, dans lequel la séparation comprend une flottation dans deux milieux de flottation ou plus ayant des densités différentes.

5. Procédé selon l'une quelconque des revendications précédentes, dans lequel les lunettes usagées comprennent des lunettes de vue, des lunettes de soleil ou un mélange de celles-ci .

6. Procédé selon l'une quelconque des revendications précédentes, dans lequel les lunettes usagées comprennent au moins 25 % en poids d'acétate de cellulose, de préférence au moins 50 % en poids d'acétate de cellulose.

7. Procédé selon l'une quelconque des revendications précédentes, dans lequel les lunettes usagées comprennent de l'acier.

8. Procédé selon l'une quelconque des revendications précédentes, dans lequel les lunettes usagées comprennent de l'acétate de cellulose en contact intime avec de l'acier.

9. Procédé selon la revendication 2, dans lequel les lunettes usagées comprennent du polycarbonate.

10. Procédé selon l'une quelconque des revendications précédentes, dans lequel les lunettes usagées comprennent du verre.

11. Procédé selon l'une quelconque des revendications précédentes, dans lequel au moins 90 %, de préférence au moins 95 %, plus préférablement au moins 99 %, de l'acétate de cellulose est libéré du ou des métaux.

12. Procédé selon l'une quelconque des revendications précédentes, dans lequel les lunettes usagées sont triées en fonction de leur teneur en plastique avant le recyclage.

13. Procédé selon l'une quelconque des revendications précédentes, comprenant également l'étape :
d) d'utilisation d'acétate de cellulose broyé dans la fabrication de nouvelles montures de lunettes.
